# EUROPEAN PATENT SPECIFICATION

(11) **EP 3 978 386 B1**
(45) Date of publication and mention of the grant of the patent: **17.07.2024**
(21) Application number: 20815064.9
(22) Date of filing: 25.05.2020
(51) Int. Cl.: B65D 35/56, A61C 5/66, A61C 5/62, B65D 50/00

(54) **COUPLING STRUCTURE OF DENTAL VISCOUS MATERIAL PACKAGE**
KOPPLUNGSSTRUKTUR EINER VERPACKUNG FÜR ZÄHFLÜSSIGE DENTALMATERIALIEN
STRUCTURE DE COUPLAGE D'EMBALLAGE DE MATÉRIAU VISQUEUX DENTAIRE

(30) Priority: 30.05.2019 JP 2019101646
(43) Date of publication of application: 06.04.2022
(73) Proprietor: GC Corporation, Sunto-gun, Shizuoka 410-1307 (JP)
(72) Inventor: SUZUKI, Takumi, Tokyo 174-8585 (JP)
(74) Representative: Müller-Boré & Partner Patentanwälte PartG mbB
(86) International application number: PCT/JP2020/020623
(87) International publication number: WO 2020/241600

(56) References cited:
- CN-U- 207 658 262
- CN-U- 207 658 262
- JP-A- 2001 294 250
- JP-A- 2001 294 250
- JP-A- 2010 011 907
- JP-A- 2018 042 805
- JP-U- S62 102 699
- US-A1- 2009 321 382
- US-B1- 6 202 897

## Description

### TECHNICAL FIELD

The present disclosure relates to an interconnected structure of dental viscous material packages.

### BACKGROUND ART

Conventionally, when dental viscous materials are handled, the dental viscous materials are provided in cylindrical disposable containers (dental viscous material packages) (for example, see Patent Document 1). Accordingly, the dental viscous materials can be readily stored and transported.

### RELATED ART DOCUMENTS

### PATENT DOCUMENTS

Patent Document 1: International Publication No. 2018/003741

US2009321382 discloses a series of bottles containing fluid wherein the series of bottles can be connected to each other by interposing weakened areas or preset breakage lines between their lids.

### DISCLOSURE OF THE INVENTION

### PROBLEM TO BE SOLVED BY THE INVENTION

Where dental treatment is performed, it is common to prepare dental viscous materials of multiple colors so as to be able to deal with individual differences of the teeth and portions to be fixed of each patient. In addition, for home visit dental services that are expected to increase in the future, multiple dental viscous material packages are desirably organized and capable of being carried around.

It is an object of the present disclosure to provide an interconnected structure of dental viscous material packages that facilitates carrying of the multiple dental viscous material packages.

### MEANS OF SOLVING THE PROBLEM

The invention is as defined in the appended claims.

An interconnected structure of dental viscous material packages according to an aspect of an embodiment of the present invention includes the dental viscous material packages and an interconnecting part configured to interconnect the dental viscous material packages such that the dental viscous material packages are collected together.

### EFFECTS OF THE INVENTION

According to the present disclosure, the interconnected structure of dental viscous material packages that facilitates carrying of the multiple dental viscous material packages can be provided.

### BRIEF DESCRIPTION OF DRAWINGS

FIG. 1 is a drawing illustrating a schematic configuration of an interconnected structure of dental viscous material packages according to a first embodiment.
FIG. 2 is a drawing illustrating a schematic configuration of an interconnected structure of dental viscous material packages according to a second embodiment.
FIG. 3 is a drawing illustrating a schematic configuration of an interconnected structure of dental viscous material packages according to a third embodiment.

### MODE OF CARRYING OUT THE INVENTION

Hereinafter, embodiments are explained with reference to the attached drawings. To facilitate understanding of the explanation, the same constituent elements are denoted with the same reference numerals, as much as possible, in the drawings, and duplicate explanation is omitted.

### [First embodiment]

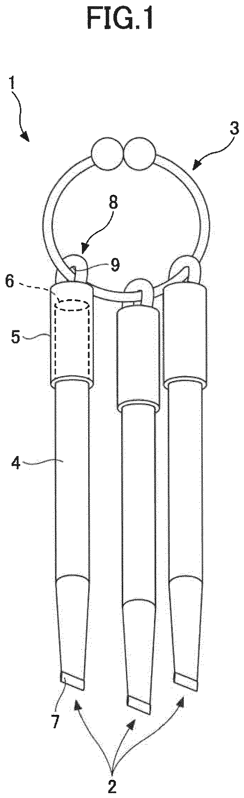

The first embodiment is described with reference to FIG. 1. FIG. 1 is a drawing illustrating a schematic configuration of an interconnected structure 1 of dental viscous material packages according to the first embodiment (which may also be hereinafter simply referred to as the "interconnected structure 1") . The interconnected structure 1 of dental viscous material packages can also be referred to as "a coupling body of dental viscous material packages" or "a dental viscous material packing coupling body".

As illustrated in FIG. 1, the interconnected structure 1 includes multiple dental viscous material packages 2 (which may also be hereinafter simply referred to as the "packages 2") and a ring 3 (an interconnecting part, a ring-shaped member).

The inside of the package 2 is filled with a dental viscous material. The package 2 includes: a container 4 in a cylindrical shape, one end of which is provided with an opening portion 6; and a lid body 5 attached to the one end of the container 4 to close the opening portion 6. At the other end of the container 4, the package 2 is closed by a sealing portion 7 made by bonding opposing edges. The package 2 is in what is termed as a tube shape.

The package 2 allows a tool to be inserted or the like from the opening portion 6, on one end of the container 4 in the cylindrical shape, to the inside of the container 4, so that the dental viscous material filled in the inside can be scraped out or squeezed through the opening portion 6.

On the other end of the container 4, the sealing portion 7 is in such a form that the opposing edges are bonded with each other by squashing the end portion of the container 4 in the cylindrical shape. Therefore, the opening of the package 2 on the other end side can be closed without adding another member, and the package 2 can be made into an extremely simple form.

The material constituting the container 4 is not particularly limited, but is preferably a hard material having a predetermined strength. Specifically, polyethylene, polyacetal, polypropylene, polyamide, vinyl chloride resin, nylon, phenol resin, polyurethane, saturated polyester resin, melamine resin, polyvinylidene chloride, unsaturated polyester resin, polybutadiene, polystyrene, ethylene-vinyl acetate (EVA) copolymer resin, polystyrene resin, polymethylpentene, methacrylic styrene, acrylonitrile butadiene styrene (ABS) resin, polycarbonate resin, and the like can be used preferably. The container 4 is preferably manufactured by extrusion molding. In this way, the container 4 is made of a relatively hard material, which can prevent air bubbles from entering the dental viscous material when the container 4 is greatly crushed by a force of a person or the like, or as the crushed container 4 returns to the pre-crushed state.

The dental viscous material is a dental filling material, a material for artificial teeth, a material for making a crown material, or the like, in the field of dentistry. A specific example includes a paste-like material referred to as a composite resin, which is a curing resin in a tooth color that is cured when exposed to light, wherein the material is based on polyfunctional monomer and obtained by dispersing a filler such as glass powder or silica powder in the resin.

The dental viscous material such as composite resin may become degraded by light or oxygen in the air, so it is desirable to prevent exposure to light or air during storage.

The ring 3 functions as an interconnecting part that connects multiple packages 2 such that the multiple packages 2 are collected together. For example, the ring 3 is an annular member, and is made of resin or metal. The ring 3 is in a form of, for example, a key ring or the like, and is capable of coupling multiple packages 2.

The package 2 is coupled to the ring 3 through an insertion portion 8 (a retaining unit) provided on the lid body 5. The insertion portion 8 is provided to protrude in the extension direction of the package 2 from the end portion on the opposite side from the side where the container 4 of the lid body 5 is inserted. The insertion portion 8 is provided with a through hole 9 into which the ring 3 can be inserted. By passing the ring 3 through the through hole 9 of the insertion portion 8, the multiple dental viscous material packages 2 are coupled to the ring 3, so that the interconnected structure 1 collecting the multiple dental viscous material packages 2 together is structured.

Dental viscous materials such as composite resins are provided in multiple colors, and where dental treatment is performed, it is common to select and use a material that suits the color of the teeth of a patient from among dental viscous materials in multiple colors. Therefore, it is preferable to be able to organize and carry dental viscous material packages 2 in multiple colors. With the interconnected structure 1 according to the present embodiment, multiple dental viscous material packages 2 can be interconnected and collected together by the ring 3 in a manner as described above, and therefore, carrying of multiple dental viscous material packages 2 can be facilitated. In addition, any given package 2 can be coupled to the ring 3, and therefore, a combination of packages 2 to be collected together can be freely selected. Accordingly, a set of materials can be prepared according to various tasks of dental treatment, and a partially used color can be readily refilled. Therefore, versatility can be improved.

Also, in the present embodiment, multiple dental viscous material packages 2 are coupled to the ring 3 through the insertion portions 8 provided on the lid bodies 5 of the packages 2. In other words, the container 4 of the package 2 is not directly coupled to ring 3 and rather the container 4 is coupled via the lid body 5, so that, when the container 4 of any given package 2 is removed from the lid body 5, the container 4 can be used alone. This allows each package 2 to be used without being affected by the ring 3 or other packages 2, and even when multiple packages 2 are collected together, a decrease in the work efficiency can be reduced without impairing the usability of each package.

In addition, according to the present embodiment, multiple packages 2 are not simply coupled to the ring 3, and rather multiple packages 2 are coupled to the ring 3 through the insertion portions 8 (the retaining units) provided on the lid bodies 5. After the dental viscous material package 2 is used, it is necessary to attach the opening portion 6 to the lid body 5 to store it in a closed state in order to prevent the dental viscous material from being exposed to light and air. Therefore, in the above configuration of the present embodiment, after use, the package 2 will inevitably be returned to the lid body 5 coupled to the ring 3, and as a result, the effect of preventing the package 2 from being lost is enhanced.

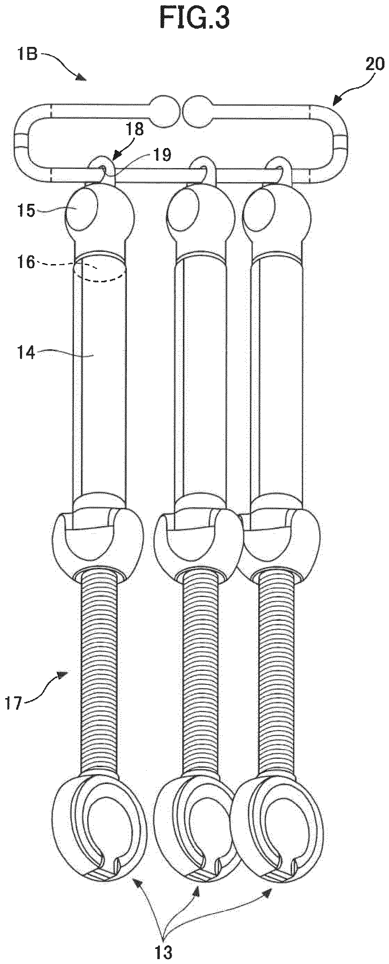

So long as the ring 3 can be passed through the through hole 9 of the insertion portion 8 of the package 2, the ring 3 is not particularly limited, and the ring 3 may be made as a ring-shaped member (for example, a ring-shaped member 20 in an elliptic shape in FIG. 3) instead of being made as an annulus. So long as the insertion portion 8 can be retained by the ring 3, the insertion portion 8 is not particularly limited, and, for example, a latching structure other than the through hole 9, such as a configuration for latching the ring 3 with a claw-shaped member, may be used.

### [Second embodiment]

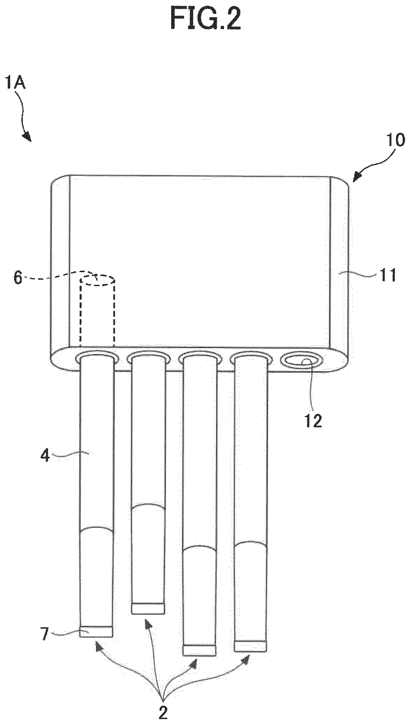

The second embodiment is explained with reference to FIG. 2. FIG. 2 is a drawing illustrating a schematic configuration of an interconnected structure 1A of dental viscous material packages according to the second embodiment.

As illustrated in FIG. 2, the interconnected structure 1A according to the second embodiment is different from the ring 3 according to the first embodiment in the configuration of an interconnecting part 10 for collecting multiple dental viscous material packages 2 together. The interconnecting part 10 includes a base unit 11 and multiple recessed portions 12 provided in the base unit 11. Each recessed portion 12 is formed such that an end portion of a package 2 on the side of the opening portion 6 can be inserted and retained in the recessed portion 12.

In the interconnected structure 1A according to the second embodiment, multiple dental viscous material packages 2 are fitted in the respective recessed portions 12 of the interconnecting part 10, so that multiple dental viscous material packages 2 are coupled to the interconnecting part 10, and accordingly, the multiple dental viscous material packages 2 can be collected together.

In addition, according to the present embodiment, multiple packages 2 are not simply coupled to the interconnecting part 10, and rather, when the packages 2 are coupled to the interconnecting part 10, the opening portions 6 of the packages 2 are sealed by the respective recessed portions 12 of the interconnecting part 10. After the dental viscous material package 2 is used, it is necessary to attach the opening portion 6 to the recessed portion 12 to store it in a closed state in order to prevent the dental viscous material from being exposed to light and air. Therefore, in the above configuration of the present embodiment, after use, the package 2 will inevitably be returned to the recessed portion 12 provided in the interconnecting part 10, and as a result, the effect of preventing the package 2 from being lost is enhanced.

### [Third embodiment]

The third embodiment is explained with reference to FIG. 3. FIG. 3 is a drawing illustrating a schematic configuration of an interconnected structure 1B of dental viscous material packages according to the third embodiment.

As illustrated in FIG. 3, the interconnected structure 1B according to the third embodiment is different from the packages 2 according to the first and second embodiments in the structure of multiple dental viscous material packages 13 collected together by a ring-shaped member 20.

The dental viscous material package 13 is what is termed as a dental syringe. A plunger 17 capable of being screwed into a container 14 is provided on the other end on the opposite side from an opening portion 16 on one end side of the container 14 that is filled with a dental viscous material. The opening portion 16 is sealed by a lid body 15, and upon opening the lid body 15 and screwing the plunger 17 into the dental syringe main body (into the container 14), a filling material pushed out through the opening portion 16 is scraped and used, and then, after the filling material has been scraped, the opening portion 16 is closed again by the lid body 15, so that the filling material can be sealed and stored.

Further, the dental syringes 13 according to the third embodiment are also coupled to the ring-shaped member 20 through insertion portions 18 (retaining units) provided on the lid bodies 15. The insertion portion 18 is provided to protrude in the extension direction of the dental syringe 13 from the end portion of the lid body 15 on the opposite side from a side of the lid body 15 where the container 14 is inserted. The insertion portion 18 is provided with a through hole 19 into which the ring-shaped member 20 can be inserted. When the ring-shaped member 20 is passed through the through holes 19 of the insertion portions 18, multiple dental syringes 13 are coupled to the ring-shaped member 20. Accordingly, the interconnected structure 1B collecting multiple dental syringes 13 together is structured.

In addition, according to the present embodiment, multiple dental syringes 13 are not simply coupled to the ring-shaped member 20, and rather multiple dental syringes 13 are coupled to the ring-shaped member 20 through the insertion portions 18 (the retaining units) provided on the lid bodies 15. After the dental syringe 13 is used, it is necessary to attach the opening portion 16 to the lid body 15 to store it in a closed state in order to prevent the dental viscous material from being exposed to light and air. Therefore, in the above configuration of the present embodiment, after use, the dental syringe 13 will inevitably be returned to the lid body 15 coupled to the ring-shaped member 20, and as a result, the effect of preventing the dental syringe 13 from being lost is enhanced.

Hereinabove, the present embodiment has been described with reference to specific examples. However, the present disclosure is not limited to these specific examples. Specific examples to which design changes are applied as appropriate by those skilled in the art are also included in the scope of the present disclosure, so long as they have the features of the present disclosure. Elements included in each of the above-described specific examples and their arrangement, conditions, shapes, and the like are not limited to those illustrated and can be changed as appropriate. The combinations of the elements of each of the above-described specific examples can be changed as appropriate so long as no technical contradiction arises.

This International Application claims priority to Japanese Patent Application No. 2019-101646 filed on May 30, 2019.

### DESCRIPTION OF THE REFERENCE NUMERALS

1, 1A, 1B interconnected structure of dental viscous material packages
2 dental viscous material package
3 ring (interconnecting part)
4 container
5, 15lid body
6, 16opening portion
8, 18insertion portion (retaining unit)
9, 19through hole
10 interconnecting part
11 base unit
12 recessed portion
13 dental syringe (dental viscous material package)
17 plunger
20 ring-shaped member (interconnecting part)

## Claims

1. An interconnected structure of dental viscous material packages (1, 1A, 1B), comprising:
the dental viscous material packages (2); and
an interconnecting part (3, 10, 20) configured to interconnect the dental viscous material packages (2) such that the dental viscous material packages (2) are collected together;
wherein each of the dental viscous material packages (2) includes:
a container (4), one end of which is provided with an opening portion (6, 16); and
a lid body (5, 15) configured to be attached to the one end of the container (4) to seal the opening portion (6, 16),
wherein each of the dental viscous material packages (2) is configured to be coupled to the interconnecting part (3, 10, 20) by a retaining unit (8, 18) provided on the lid body (5, 15),
wherein the interconnecting part (3, 10, 20) is a ring-shaped member (3, 20).

2. The interconnected structure of the dental viscous material packages according to claim 1, wherein
the retaining unit is an insertion portion including a through hole into which the ring-shaped member is configured to be inserted, and
each of the dental viscous material packages is configured to be coupled to the interconnecting part such that the ring-shaped member is passed through the through hole.

3. The interconnected structure of the dental viscous material packages (1, 1A, 1B) according to claim 1, wherein, on another end on an opposite side from an opening portion (6, 16), each of the dental viscous material packages (2) is closed by a sealing portion (7) formed by bonding opposing edges.

4. The interconnected structure of the dental viscous material packages (1, 1A, 1B) according to claim 1, wherein the dental viscous material packages (2) are dental syringes (13), and
each of the dental viscous material packages (2) includes a plunger (17) that is provided on another end on an opposite side from an opening portion (6, 16), the plunger (17) being configured to be screwed into a syringe main body (14).

## Patentansprüche

1. Verbundene Struktur von Packungen mit einem viskosen Dentalmaterial (1, 1A, 1B), umfassend:
die Packungen mit einem viskosen Dentalmaterial (2); und
einen Verbindungsteil (3, 10, 20), der zum Verbinden der Packungen mit einem viskosen Dentalmaterial (2) ausgebildet ist, derart, dass die Packungen mit einem viskosen Dentalmaterial (2) zusammengehalten werden;
wobei jede der Packungen mit einem viskosen Dentalmaterial (2) umfasst:
einen Behälter (4), wobei ein Ende davon mit einem Öffnungsabschnitt (6,16) versehen ist; und
einen Deckelkörper (5, 15), der zum Anbringen an das eine Ende des Behälters (4) zum Verschließen des Öffnungsabschnitts (6, 16) ausgebildet ist,
wobei jede der Packungen mit einem viskosen Dentalmaterial (2) zum Koppeln mit dem Verbindungsteil (3, 10, 20) durch eine Halteeinheit (8, 18), die auf dem Deckelkörper (5, 15) bereitgestellt ist, ausgebildet ist,
wobei der Verbindungsteil (3, 10, 20) ein ringförmiges Element (3, 20) ist.

2. Verbundene Struktur von Packungen mit einem viskosen Dentalmaterial nach Anspruch 1, wobei
die Halteeinheit ein Einsetzabschnitt ist, der ein Durchgangsloch umfasst, wobei das ringförmige Element so ausgebildet ist, dass es in dieses eingesetzt werden kann, und
jede der Packungen mit einem viskosen Dentalmaterial zum Koppeln mit dem Verbindungsteil ausgebildet ist, derart, dass das ringförmige Element durch das Durchgangsloch hindurchgeführt wird.

3. Verbundene Struktur von Packungen mit einem viskosen Dentalmaterial (1, 1A, 1B) nach Anspruch 1, wobei an einem anderen Ende auf einer gegenüberliegenden Seite bezogen auf einen Öffnungsabschnitt (6, 16) jede der Packungen mit einem viskosen Dentalmaterial (2) durch einen Verschlussabschnitt (7) verschlossen wird, der durch Kleben gegenüberliegender Kanten gebildet wird.

4. Verbundene Struktur von Packungen mit einem viskosen Dentalmaterial (1, 1A, 1B) nach Anspruch 1, wobei die Packungen mit einem viskosen Dentalmaterial (2) Dentalspritzen (13) sind, und
jede der Packungen mit einem viskosen Dentalmaterial (2) einen Kolben (17) umfasst, der an einem anderen Ende auf einer gegenüberliegenden Seite bezogen auf einen Öffnungsabschnitt (6, 16) bereitgestellt ist, wobei der Kolben (17) zum Schrauben in einen Spritzenhauptkörper (14) ausgebildet ist.

## Revendications

1. Structure interconnectée d'emballages de matériau visqueux dentaire (1, 1A, 1B), comprenant :
les emballages de matériau visqueux dentaire (2) ; et
une partie d'interconnexion (3, 10, 20) configurée pour interconnecter les emballages de matériau visqueux dentaire (2) de sorte que les emballages de matériau visqueux dentaire (2) sont réunis ensemble ;
dans laquelle chacun des emballages de matériau visqueux dentaire (2) inclut :
un récipient (4) dont une extrémité est pourvue d'une portion d'ouverture (6, 16) ; et
un corps de couvercle (5, 15) configuré pour être relié à l'extrémité en question du récipient (4) pour sceller la portion d'ouverture (6, 16),
dans laquelle chacun des emballages de matériau visqueux dentaire (2) est configuré pour être couplé à la partie d'interconnexion (3, 10, 20) par un module de retenue (8, 18) prévu sur le corps de couvercle (5, 15),
dans laquelle la partie d'interconnexion (3, 10, 20) est un élément de forme annulaire (3, 20).

2. Structure interconnectée des emballages de matériau visqueux dentaire selon la revendication 1, dans laquelle
le module de retenue est une portion d'insertion incluant un orifice traversant dans lequel l'élément de forme annulaire est configuré pour être inséré, et
chacun des emballages de matériau visqueux dentaire est configuré pour être couplé à la partie d'interconnexion de sorte que l'élément de forme annulaire est passé à travers l'orifice traversant.

3. Structure interconnectée des emballages de matériau visqueux dentaire (1, 1A, 1B) selon la revendication 1, dans laquelle, sur une autre extrémité sur un côté opposé depuis une portion d'ouverture (6, 16), chacun des emballages de matériau visqueux dentaire (2) est fermé par une portion de scellement (7) formée en assemblant des bords opposés.

4. Structure interconnectée des emballages de matériau visqueux dentaire (1, 1A, 1B) selon la revendication 1, dans laquelle les emballages de matériau visqueux dentaire (2) sont des seringues dentaires (13), et
chacun des emballages de matériau visqueux dentaire (2) inclut un piston (17) qui est prévu sur une autre extrémité sur un côté opposé depuis une portion d'ouverture (6, 16), le piston (17) étant configuré pour être vissé dans un corps principal de seringue (14).
